# EUROPEAN PATENT SPECIFICATION

(11) **EP 2 980 186 B1**
(45) Date of publication and mention of the grant of the patent: **06.12.2017**
(21) Application number: 15177979.0
(22) Date of filing: 23.07.2015
(51) Int. Cl.: C10B 47/06, C10B 53/07

(54) **PLANT FOR DISPOSING OF USED TYRES**
ANLAGE ZUR BESEITIGUNG VON ALTREIFEN
INSTALLATION POUR LA MISE AU REBUT DE PNEUS USAGÉS

(30) Priority: 29.07.2014 IT MO20140217; 29.07.2014 IT MO20140218; 29.07.2014 IT MO20140220
(43) Date of publication of application: 03.02.2016
(73) Proprietor: Societa' per Azioni Curti - Costruzioni Meccaniche, 48014 Castel Bolognese (RA) (IT)
(72) Inventor: Bortolani, Giuseppe, 41125 Modena (IT); Giorgini, Loris, 40065 Pianoro (BO) (IT); Tosi, Cristian, 41013 Castelfranco Emilia (Modena) (IT)
(74) Representative: Crugnola, Pietro

(56) References cited:
- EP-A2- 2 366 758
- WO-A1-99/08849
- WO-A1-2013/089586
- WO-A1-2014/057430
- CN-A- 102 757 803
- DE-A1- 19 617 450
- JP-A- S52 144 074
- JP-A- 2000 226 586
- JP-A- 2011 033 333
- JP-U- S5 660 749

## Description

The present invention relates to a plant for transforming into secondary raw material, or disposing of, used tyres, made of rubber or other carbon matrices, in particular a plant for continuous transformation into secondary raw material, or disposal by pyrolysis of used tyres, made of rubber or other carbon matrices.

In the prior art continuous cycle plants are known for disposing of organic or carboniferous materials by pyrolysis.

FR2877427 discloses a plant for treating solid organic materials that operates on a continuous cycle. The plant comprises a kiln provided with a body inside which a temperature is maintained that is able to ensure pyrolysis and conveying means that describe a closed circuit and that ensure conveying of the organic solid material to be treated by containers inside which the previously shredded solid organic material arrives by the force of gravity from distributing means. The plant further comprises, in addition to the hydraulic seals located respectively in the entrance zone to the kiln of the material to be treated and in the exit zone from the kiln of the treated material.

FR2877427 has the drawback that the organic material to be treated has to be previously shredded, which entails, in particular in the case of tyres, a considerable expenditure of energy for the shredding operation. Further, the fact that the material to be treated is delivered to the pyrolysis kiln inside suitable containers means that also the latter are heated during the pyrolysis process, which entails a further expenditure of energy, in addition to the expenditure due to the cost of the containers, which have to be of special steel that is able to withstand the chemical attacks and the abrasive actions (in particular for the drivable material) found inside the pyrolysis kiln. Further, a system with containers, like the one disclosed in FR2877427, although it appears easy to make is not in reality, in fact the working conditions of continuous cooling-heating and transition through the hydraulic seals entail great limitations to the material that is usable to make the containers. Further, the continuous passage through the hydraulic seals with the carriages entails, on the one side, a significant expenditure and on the other side a significant removal of fluids from and to the system, greatly decreasing efficiency or making the efficacy of the seals poor. Further, the carriages, at the exit from the reactor, contain not only rejects but also the seal liquid from which the rejects have to then be separated.

WO2014/057430, in the name of the same applicant, of this application, discloses a plant for disposing of used tyres, made of rubber or other carbon matrices, comprises a pyrolysis chamber, in which said used tyres are subjected to pyrolysis treatment, said tyres being conveyed to said pyrolysis chamber by conveying means. The plant further comprises first hydraulic sealing means placed at the inlet of the pyrolysis chamber, heating means for heating the pyrolysis chamber, first evacuating means for evacuating from the pyrolysis chamber gaseous substances produced during the pyrolysis treatment and second evacuating means for evacuating from the pyrolysis chamber solid residues of the pyrolysis treatment. The tyres, before being placed in the pyrolysis chamber, are subjected to a cutting operation along one or more diametric planes, or along a plane that is perpendicular to an axis of the tyre. The plant can also comprise second hydraulic sealing means, placed at the exit of the pyrolysis chamber.

One drawback of this plant consists of the fact that there is a significant loss of heat through the hydraulic seals, which determines an increase in the operating costs of the plant.

Another drawback is the need to convey the tyres to be treated through the pyrolysis chamber, which entails a significant increase in the cost of the plant, due to the high cost of the conveyor, which has to be made from materials that have great resistance to heat, to withstand the temperatures of several hundred degrees in the pyrolysis chamber.

JP 2000 226586 discloses a method and an apparatus for carbonisation capable of solving problems of the generation of dioxins attributable to the treatment of chlorine-containing matters such as a chlorine-containing waste

The apparatus comprises a pyrolysis chamber, into which the material to be treated is placed by means of a series of screw conveyors that pass the material into a hydraulic sealing chamber and convey the material through a first conduit, a portion of which extends prevalently vertically. From the conduit the material falls by the force of gravity into a further conduit through which the material is conveyed to the pyrolysis chamber and is conveyed by a further screw conveyor through the pyrolysis chamber.

At the exit from the pyrolysis chamber, the solid residues of the treated material are conveyed to a further hydraulic sealing chamber by a still further screw conveyor. The solid residues that float on the surface of the liquid are evacuated by a belt conveyor.

The apparatus disclosed in JP 2000 226586 has numerous drawbacks. Above all, it requires the material to be treated to be shredded beforehand because only items of small dimensions can be conveyed by the screw conveyors of the plant, which is thus absolutely unsuitable for treating whole tyres or tyres divided into two halves.

Further, there is no thermal insulation between the pyrolysis chamber and the hydraulic seals, which determines significant absorption of heat through the hydraulic seals, with consequent significant deterioration of the thermal efficiency of the apparatus.

Lastly, conveying the material to be treated through the pyrolysis chamber by a screw conveyor entails a significant increase of the cost of the plant, due to the high cost of the conveyor, which has to be made from materials that have great resistance to heat, to withstand the temperatures of several hundred degrees in the pyrolysis chamber.

DE 19617450 discloses a plant for the pyrolysis of used tyres that comprises a pyrolysis chamber, preceded by an entrance chamber through which the tyres are introduced into the pyrolysis chamber, and followed by an exit chamber. Between the pyrolysis chamber, the entrance chamber and the exit chamber slidable bulkheads are arranged that are driven by actuators and are movable between a closed position and an open position. There are also further bulkheads at the inlet to the entrance chamber and at the exit from the exit chamber. The tyres are placed on a guide that extends through the three chambers of the plant and through a hydraulic sealing chamber, through which the tyres pass before reaching the entrance chamber.

Driving means is provided for rotating the guide and advancing the tyres along the guide.

The plant disclosed in DE19617450 has the drawback that, despite the presence of the slidable bulkheads, the thermal insulation between the pyrolysis chamber and the hydraulic sealing chamber is not good because the heat can be easily transmitted along the guide on which the tyres run. In fact, the guide is made with a cage structure, i.e. a structure that is internally hollow and constitutes no obstacle to the transmission of heat to the hydraulic sealing chamber, even with the bulkheads closed.

Another drawback consists of the fact that the driving means that controls the rotation of the guide and the advancement of the tyres also has to operate inside the pyrolysis chamber, which requires the driving means to be made of expensive materials that have great heat resistance, with a consequent increase in plant manufacturing costs.

One object of the invention is to provide a plant for continuous cycle treatment of used tyres by pyrolysis, which does not require expensive tyre shredding operations, which does not require special containers for conveying the tyres to the kiln in which pyrolysis occurs and which minimises heat loss, optimising plant running costs.

The object of the invention is achieved by a plant according to claim 1.

Owing to the invention, it is possible to treat in a continuous cycle by means of pyrolysis whole used tyres or tyres that have been cut into two parts at most, without it being necessary to use special containers to convey the tyres to the treatment chamber. Further, heat loss from the treatment chamber is minimised, which enables plant efficiency to be maximised and fuel consumption and plant running costs to be reduced.

One manner of implementing the invention is disclosed below with reference to the enclosed drawings, in which:
Figure 1 is a perspective view of a plant according to the invention;
Figure 2 is a raised view of the plant according to the invention;
Figure 3 is a cross section of the plant according to the invention, along the plane III-III in Figure 2;

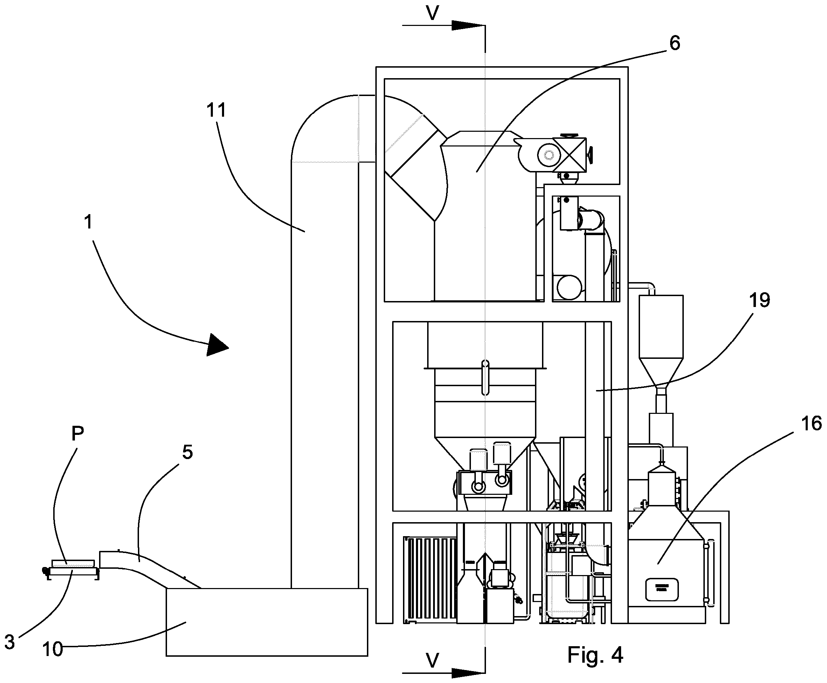

Figure 4 is a view from the left of the Figure 2;

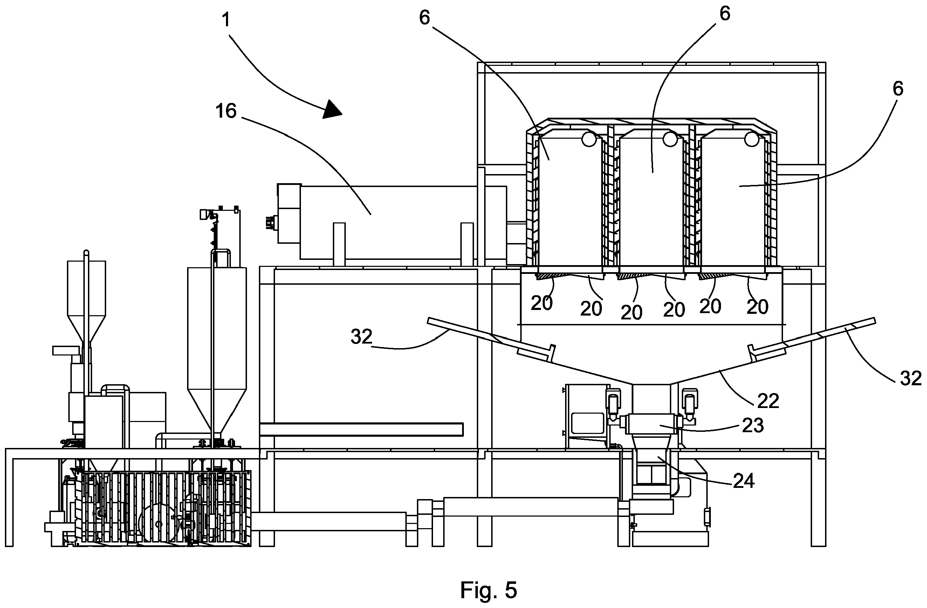

Figure 5 is a longitudinal section of the plant according to the invention, along the plane V-V in Figure 4;
Figure 6 is an enlarged detail of Figure 3, that illustrates the pyrolysis chamber with the corresponding zone of unloading;
Figure 7 is an enlarged detail of Figure 3, indicated by letter A in Figure 3;
Figure 8 is a detail of Figure 3 that has been enlarged further that illustrates the zone of unloading from the pyrolysis chamber of the solid products deriving from the pyrolysis process.

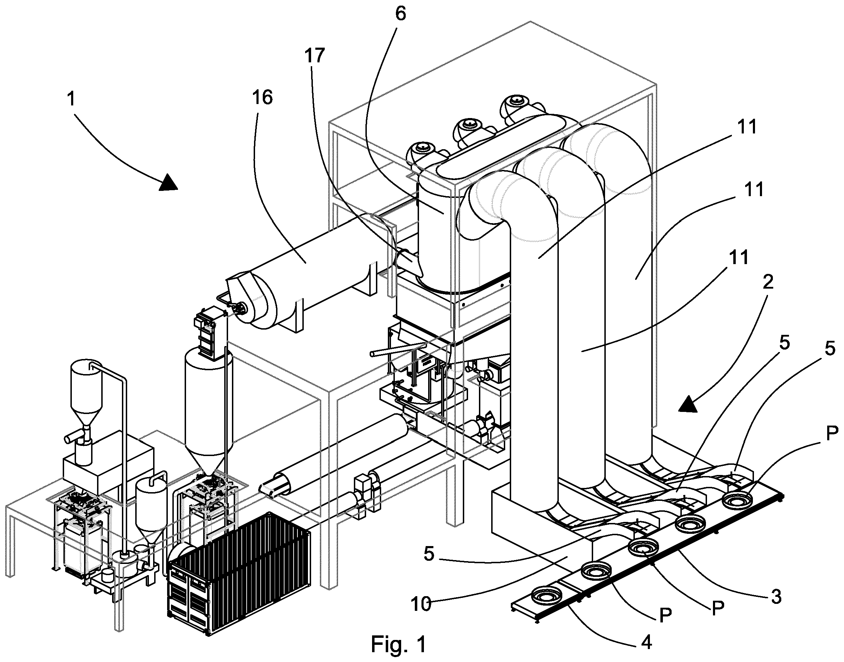

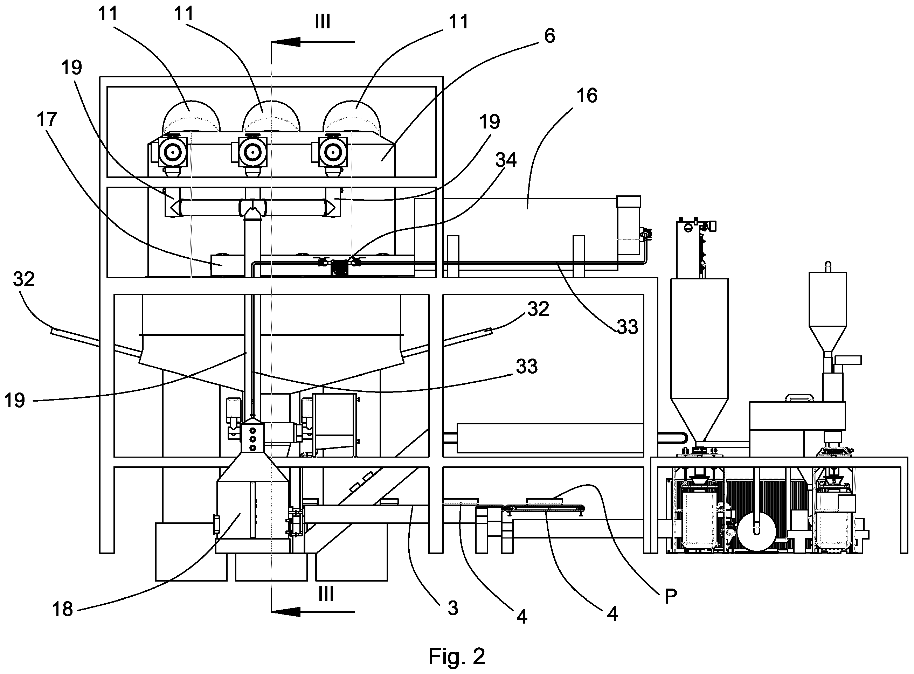

In Figures 1 to 3 there is illustrated a first embodiment of a plant 1 according to the invention.

With reference to the figures, the plant according to the invention is indicated overall by the reference number 1.

The plant 1 comprises a supply zone 2 in which the tyres P are loaded into the plant 1. The tyres P, previously divided into two halves by means of a cut along a plane that is perpendicular to the axis of the tyre P. The tyres P are conveyed to the supply zone 2 by a first conveying device 3, for example a conveyor belt. The first conveying device 3 comprises a weighing section 4 in which the tyres P are weighed to determine the weight of the material that will be subjected to the pyrolysis treatment.

The first conveying device 3 is associated with diverting or pushing means, (which is not shown) by means of which the tyres P are conveyed to at least one supplying device 5, which conveys the tyres P to a respective pyrolysis chamber 6. In the illustrated device, the plant 1 comprises three supplying devices 5 and three pyrolysis chambers 6, each of which is supplied with the tyres P by a respective supplying device. The number of supplying devices 5 and of pyrolysis chambers 6 of the illustrated embodiment must not be deemed to be in any manner limiting. In fact, the supplying devices 5 and of pyrolysis chambers 6 of the plant 1 according to the invention can be of any type, depending on the productivity needs of the plant.

The at least one supplying device 5 comprises a second conveying device consisting of a rung conveyor 7, comprising a plurality of rungs 8 on which the tyres P can be fastened and supported.

The rung conveyor 7 conveys the tyres P through a hydraulic seal element 9 that comprises a tank 10 containing a liquid L, for example water or oil. The hydraulic seal element 9 is used to prevent gas and solid polluting particles from being able to pass in an uncontrolled manner from the pyrolysis chamber 6 to the external environment.

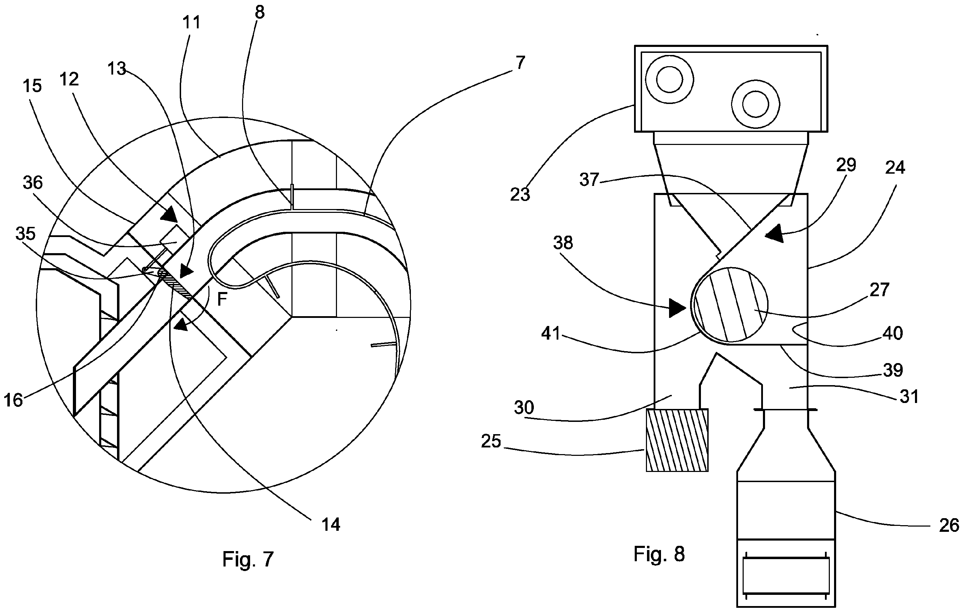

The tyres P, after passing through the tank 10, are conveyed along a supplying conduit 11, which, for example, extends prevalently vertically until it reaches an inlet zone 12 of the pyrolysis chamber 6, where the tyres P are released from the rung conveyor 7 and drop by gravity into the pyrolysis chamber 6, through an inlet opening 13 (Figure 7) closed by a movable closing element 14 that is coated with thermally insulating material.

The movable closing element 14 can be moved between a closed position, shown in Figure 7, and an open position (not shown) by rotating around a hinge element 16, in the direction of the arrow.

The rotation of the movable closing element 14 is controlled by an actuator 36 connected to an end 35 of the movable closing element. When a tyre P reaches the inlet zone 13, conveyed by the rung conveyor 7, the actuator 36 commands the rotation of the movable closing element 14 to the open position to enable the tyre to enter the pyrolysis chamber 6, by dropping by gravity through the opening 13. After the tyre P has passed through the opening 13, the actuator 36 commands a further rotation of the movable closing element 14, to take the movable closing element 14 to the closed position. The supplying conduit 11 extends vertically for at least 4 metres, preferably for a height comprised between 4 and 20 metres.

Owing to the prevalently vertical extent of the supplying conduit 11, it is possible to minimise the heating of the surface of the liquid L in the tank 10, through the effect of the heat that penetrates the supplying conduit 11 coming from the pyrolysis chamber 6, each time that a tyre P passes through the inlet opening 13 of the pyrolysis chamber 6. In fact, the gases contained in the supplying conduit 11 that are heated by the heat coming from the pyrolysis chamber are layered inside the conduit to generate a temperature gradient, with the maximum temperature in the upper part of the conduit and the lower temperature in the lower part of the conduit in which the air is in contact with the liquid L contained in the tank 10. Further, the thermally insulating coating of the movable closing element 14 minimises the quantity of heat that can be transmitted to the gases contained in the conduit 11 through the movable closing element, when the movable closing element is in the closed position.

By minimising the heating of the surface of the liquid L, evaporation of the liquid is minimised and consequently the steam that can penetrate the pyrolysis chamber 6, absorbing heat during the pyrolysis process. This heat absorption causes a reduction in the energy efficiency of the plant 1. Thus, the minimisation of the quantity of steam of the liquid L that can enter the pyrolysis chamber 6 contributes to maximising the energy efficiency of the plant 1 according to the invention.

In order to reduce further the heat that can be transmitted to the liquid L, an end portion 15 of the supplying conduit 11, in contact with the pyrolysis chamber 6, is insulated with thermally insulating material, so as to minimise a passage of heat from the pyrolysis chamber 6 to the wall of the supplying conduit 11.

The pyrolysis chamber 6 is heated with gas at a high temperature, of the order of several hundred degrees Celsius, which gas is produced in a combustion chamber 16 and is delivered into said chamber by a supplying conduit 17 that connects the combustion chamber 16 to the pyrolysis chamber 6.

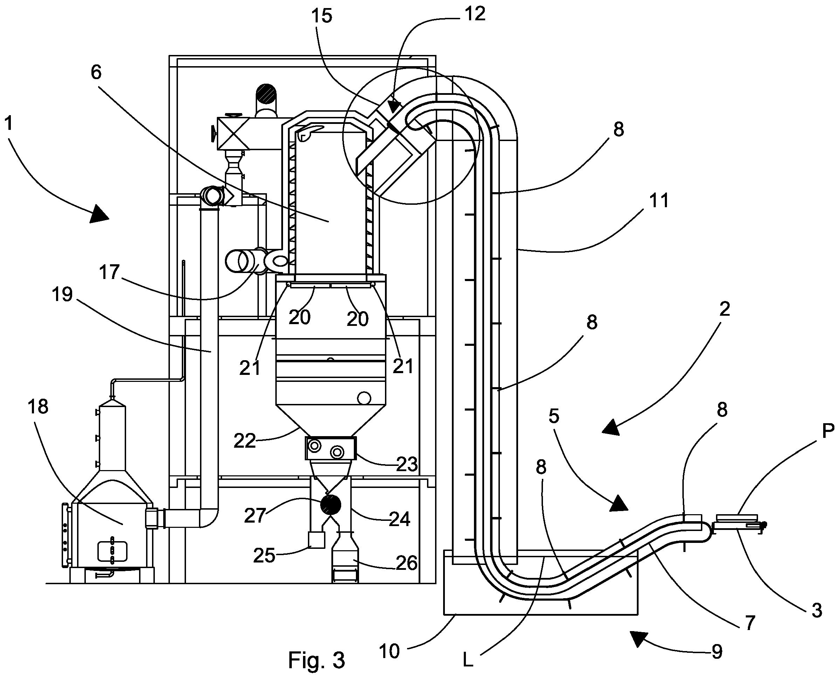

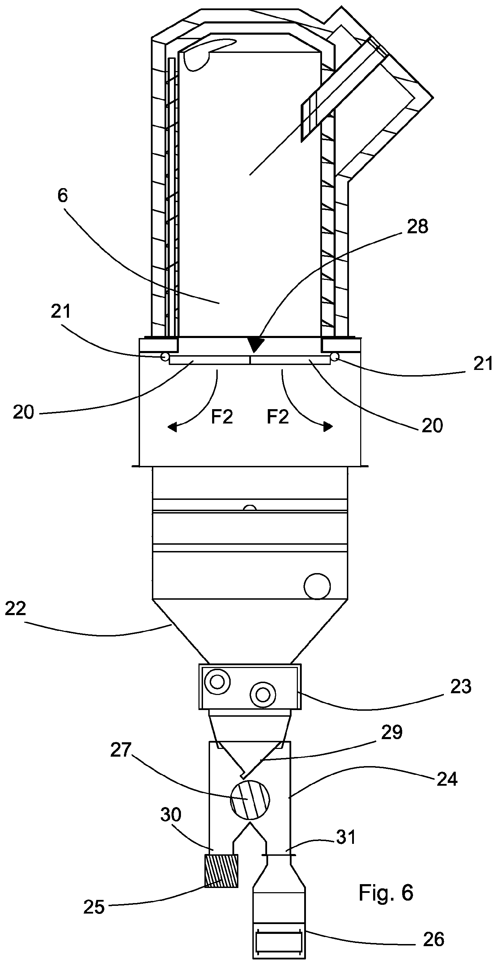

The gaseous substances produced during the pyrolysis process are extracted from the pyrolysis chamber 6 by a discharge conduit 19 and sent to a condenser 18, in which the condensable substances are condensed that are present in said gaseous substances, whereas the non-condensable substances, mainly consisting of combustible gases, are supplied to the combustion chamber 16 through a conduit 33, by a fan 34 inserted into the conduit 33. During the pyrolysis treatment, the solid residual materials, which consist of carbon particles or of metallic filaments, which are normally present in tyre carcasses, gather on the bottom 28 of the pyrolysis chamber 6. The bottom 28 consists of a pair of movable elements 20, for example in the form of plates, each of which can rotate, in the direction of the respective arrow F2, around a respective hinge element 21, between a closed position illustrated in Figures 3 and 6 and an open position (not shown), to enable the solid residual materials that have accumulated on the bottom 28 to be discharged from the pyrolysis chamber 6. The opening and closing of the bottom 28 of the pyrolysis chamber can be commanded by suitable driving means (which is not shown), at preset intervals, depending on the productive capacity of the plant.

When the bottom 28 of the pyrolysis chamber 6 opens, the solid residues fall into a hopper 22 that is placed under the bottom 28, that conveys the solid residues to a shredding device 23, in which the metal filaments are shredded so as to be reduced into fragments of relatively small dimensions, for example of the order of a few centimetres in length. In the hopper 22, a pair of pusher elements 32 is provided that push to the shredding device 23 the solid residues that accumulate on the walls of the hopper 22.

After the metal filaments have been shredded, the solid residues are conveyed to a separating device 24, in which the carbonaceous particles and the metal fragments are separated and conveyed, respectively, to a first collecting container 25 for the carbonaceous particles and to a second collecting container 26 for the metal fragments. The separating device 24 is a magnetic separating device that comprises internally a roller 27 that is drivable to rotate around a longitudinal axis thereof, on the surface of which a plurality of permanent magnets is distributed that generate a magnetic field that surrounds the roller 27. At the exit of the shredding device 23 a diverting element 29 is arranged. The diverting element 29 comprises a first chute-shaped portion 37, which directs the solid residues to a first conduit 30 connected to the first container 25, a second portion 38 that winds around the roller 27 remaining at a short distance from the surface of the roller 27, for example at a few tenths of a millimetre of distance, and a third portion 39 that moves progressively away from the roller 27 until it joins an internal surface 40 of the separating device 24. When the solid residues are discharged from the shredding device 23, the metal fragments adhere to the surface 41 of the second portion 38 of the diverting element 29, through the effect of the magnetic field generated by said permanent magnets, whereas the carbonaceous particles can drop by gravity into the first container 25, guided by the first portion 37 of the diverting element 29. The distance between the second portion 38 and the surface of the roller 27 is chosen in such a manner that the intensity of the magnetic field, at the surface 41 of the second portion 38 facing the opposite side to the roller 27, has such an intensity as to attract the metal fragments and make the metal fragments adhere to the surface 41.

By rotating the roller 27, the metal fragments adhering to said surface 41 are dragged by the magnetic field of the roller 27 along said surface 41 and, when they reach the third portion 39 of the diverting element 29, they detach therefrom and drop by gravity into the second container 26, through a second conduit 31. The metal fragments are detached from the third portion 39 through the weakening of the magnetic field at the third portion 39 due to the progressive moving away from the surface of the roller 27. It is understood that the plant according to the invention is usable not only for transforming into secondary raw material, or disposing of, used tyres, made of rubber or other carbon matrices, but also for transforming into secondary raw material, or for disposal, of any type of solid, rubber or carbonious matrix materials.

## Claims

1. Plant (1) for transforming into secondary raw material, or disposing of, used tyres (P), made of rubber or other carbon matrices, comprising at least one pyrolysis chamber (6), wherein said used tyres (P) are subjected to pyrolysis treatment, said tyres (P), previously divided into two halves, being conveyed to said at least one pyrolysis chamber (6) by means of at least one supplying device (5) that receives the tyres (P) from a first conveying device (3), said plant (1) comprising at least one hydraulic seal element (9) associated with said at least one supplying device (5) and heating means (16) for heating said at least one pyrolysis chamber (6), said at least one supplying device (5) comprising a second conveying device (7) comprising a rung conveyor, that receives the tyres (P) from the first conveying device (3) and conveys the tyres (P) through said at least one hydraulic seal element (9) and along at least one supplying conduit (11), **characterized in that** said at least one supplying conduit (11) extends prevalently vertically from a lower part communicating with said at least one hydraulic seal element (9) to an end portion (15) that reaches an inlet zone (12) of the least one pyrolysis chamber (6), **in that** said tyres (P) are released by said second conveying device (7) into said inlet zone (12) so as to drop by gravity into said pyrolysis chamber (6) through an inlet opening (13) and **in that** said inlet opening is provided with a movable closing element (14), that can rotate around a hinge element (16) between a closed position and an open position.

2. Plant (1) according to claim 1, **characterised in that** it comprises a plurality of pyrolysis chambers (6) each of which is supplied with said tyres (P) by means of a respective supplying device (5), that receives the tyres (P) from the first conveying device (3) and conveys the tyres (P) to a respective pyrolysis chamber (6) through a respective supplying conduit (11).

3. Plant (1) according to claim 1 or 2, wherein said at least one supplying conduit (11) extends vertically over a length of at least 4 metres, in particular over a length comprised between 4 and 20 metres.

4. Plant (1) according to any preceding claim, wherein said at least one hydraulic seal element (9) comprises a tank (10) containing a liquid (L), in particular water or oil.

5. Plant (1) according to any preceding claim, wherein said movable closing element (14) is coated with a thermally insulating material.

6. Plant (1) according to any preceding claim, further comprising an actuator (36) suitable for driving said movable closing element so that it rotates around said hinge element (16).

7. Plant (1) according to any preceding claim, wherein said end portion (15) of the at least one supplying conduit (11), in contact with said at least one pyrolysis chamber (6), is made of thermally insulating material.

8. Plant (1) according to any preceding claims, wherein said pyrolysis chamber (6) comprises a bottom (28) consisting of a pair of movable elements (20) each of which can rotate around a respective hinge element (21), between a closed position and an open position to enable solid residual materials of the pyrolysis treatment that have accumulated on the bottom (28) to be discharged from the pyrolysis chamber (6), below said bottom (28) a hopper (22) being arranged that is suitable for conveying said residual solid materials to a shredding device (23), said hopper (22) being provided with pushing means (32) arranged for pushing to said shredding device (23) solid residues that accumulate on the walls of the hopper (22).

9. Plant (1) according to claim 8, **characterised in that** it further comprises a separating device (24) associated with said shredding device (23), said separating device being arranged for separating carbon particles from metal fragments contained in said solid residual materials.

10. Plant according to claim 9, wherein said separating device (24) comprises a roller (27) that is drivable to rotate around a longitudinal axis thereof, on the surface of which a plurality of permanent magnets is distributed, and a diverting element (29) that comprises a first chute-shaped portion (37) that is suitable for directing said solid residual materials to a first conduit (30) connected to a first container (25), a second portion (38) that winds around the roller (27) remaining at a short distance from a surface of the roller (27), and a third portion (39) that moves progressively away from the roller (27) until it joins an internal surface (40) of the separating device (24).

11. Plant (1) according to any one of claims 8 to 10, wherein a rotation of said movable elements (20) between said closed position and said open position, and vice versa, is controlled by respective driving means, at preset time intervals.

12. Plant according to claim 10 or 11, wherein said short distance is a few tenths of a millimetre.

13. Plant (1) according to any one of claims 9 to 12, wherein said separating device (24) communicates with a second conduit (31) connected to a second container (26) intended for receiving metal fragments contained in said solid residual materials.

## Patentansprüche

1. Anlage (1) zur Umsetzung von gebrauchten Reifen (P), hergestellt aus Gummi oder anderen Kohlenstoffmatrizes, in sekundären Rohstoff oder zur Entsorgung derselben, die zumindest eine Pyrolysekammer (6) aufweist, wobei die gebrauchten Reifen (P) einer Pyrolysebehandlung zugeführt werden, wobei die Reifen (P), welche zuvor in zwei Hälften geteilt werden, zu der zumindest einen Pyrolysekammer (6) mittels zumindest einer Zufuhrvorrichtung (5) befördert werden, die die Reifen (P) von einer ersten Beförderungsvorrichtung (3) aufnimmt, wobei die Anlage (1) zumindest ein hydraulisches Dichtelement (9) aufweist, das der zumindest einen Zufuhrvorrichtung (5) zugeordnet ist, und Heizmittel (16) zum Heizen der zumindest einen Pyrolysekammer (6) aufweist, wobei die zumindest eine Zufuhrvorrichtung (5) eine zweite Beförderungsvorrichtung (7) aufweist, die einen Sprossenförderer aufweist, der die Reifen (P) von der ersten Beförderungsvorrichtung (3) aufnimmt und die Reifen (P) durch das zumindest eine hydraulische Dichtelement (9) und entlang zumindest eines Zufuhrkanals (11) befördert, **dadurch gekennzeichnet, dass** sich zumindest ein Zufuhrkanal (11) vorliegend vertikal von einem unteren Teil, das mit dem zumindest einen hydraulischen Dichtelement (9) in Verbindung steht, zu einem Endteil (15) erstreckt, das einen Eingangsbereich (12) der zumindest einen Pyrolysekammer (6) erreicht, in die die Reifen (P) durch die zweite Beförderungsvorrichtung (7) in den Eingangsbereich (12) freigesetzt werden, so dass diese durch die Schwerkraft in die Pyrolysekammer (6) durch eine Eingangsöffnung (13) fallen, und dass die Eingangsöffnung mit einem beweglichen Verschlusselement (14) versehen ist, das um ein Gelenkelement (16) herum zwischen einer geschlossenen Position und einer offenen Position rotieren kann.

2. Anlage (1) gemäß Anspruch 1, **dadurch gekennzeichnet, dass** sie eine eine Vielzahl von Pyrolysekammern (6) aufweist, wobei jede hiervon mit den Reifen (P) mittels einer jeweiligen Zufuhrvorrichtung (5) versorgt wird, die die Reifen (P) von der ersten Beförderungsvorrichtung (3) aufnimmt und die Reifen (P) zu einer jeweiligen Pyrolysekammer (6) durch einen jeweiligen Zufuhrkanal (11) befördert.

3. Anlage (1) gemäß Anspruch 1 oder 2, wobei sich der zumindest eine Zufuhrkanal (11) vertikal über eine Länge von zumindest 4 Metern, insbesondere über eine Länge, die bei 4 bis 20 Metern liegt, erstreckt.

4. Anlage (1) gemäß einem der vorherigen Ansprüche, wobei das zumindest eine hydraulische Dichtelement (9) einen Behälter (10) aufweist, der eine Flüssigkeit (L), insbesondere Wasser oder Öl, enthält

5. Anlage (1) gemäß einem der vorherigen Ansprüche, wobei das bewegliche Verschlusselement (14) mit einem thermisch isolierenden Material beschichtet ist.

6. Anlage (1) gemäß einem der vorherigen Ansprüche, die ferner einen Aktuator (36) aufweist, der geeignet ist, um das bewegliche Verschlusselement derart anzutreiben, dass es um das Gelenkelement (16) rotiert.

7. Anlage (1) gemäß einem der vorherigen Ansprüche, wobei das Endteil (15) des zumindest einen Zufuhrkanals (11), in Kontakt mit der zumindest einen Pyrolysekammer (6), aus thermisch isolierendem Material hergestellt ist.

8. Anlage (1) gemäß einem der vorherigen Ansprüche, wobei die Pyrolysekammer (6) einen Boden (28) aufweist, der aus einem Paar von beweglichen Elementen (20) besteht, wobei jedes hiervon um ein jeweiliges Gelenkelement (21) zwischen einer geschlossenen Position und einer offenen Position rotieren kann, um es zu ermöglichen, feste Restmaterialien der Pyrolysebehandlung, die sich auf dem Boden (28) gesammelt haben, von der Pyrolysekammer (6) abzugeben, wobei unterhalb des Bodens (28) ein Trichter (22) angeordnet ist, der geeignet ist, um die festen Restmaterialien zu einer Zerkleinerungsvorrichtung (23) zu befördern, wobei der Trichter (22) mit Schiebemitteln (32) versehen ist, die angeordnet sind, um feste Reste, die sich an den Wänden des Trichters (22) sammeln, in die Zerkleinerungsvorrichtung (23) zu schieben.

9. Anlage (1) gemäß Anspruch 8, **dadurch gekennzeichnet, dass** sie ferner eine Trennvorrichtung (24) aufweist, die der Zerkleinerungsvorrichtung (23) zugeordnet ist, wobei die Trennvorrichtung angeordnet ist, um Kohlenstoffpartikel von Metallfragmenten zu trennen, die in den festen Restmaterialien enthalten sind.

10. Anlage gemäß Anspruch 9, wobei die Trennvorrichtung (24) einen Roller (27) aufweist, der abgetrieben werden kann, um entlang einer Achse hiervon zu rotieren, auf dessen Oberfläche eine Vielzahl von Permanentmagneten verteilt ist, und ein Umleitungselement (29) aufweist, das ein erstes rutschenförmiges Teil (37) aufweist, das geeignet ist, um die festen Restmaterialien zu einem ersten Kanal (30) zu richten, der mit einem ersten Behälter (25) verbunden ist, ein zweites Teil (38) aufweist, das sich um den Roller (27) herumwindet und in einem kurzen Abstand von einer Oberfläche des Rollers (27) verbleibt, und ein drittes Teil (39) aufweist, das sich zunehmend von dem Roller (27) wegbewegt, bis es sich mit einer inneren Fläche (40) der Trennvorrichtung (24) verbindet.

11. Anlage (1) gemäß einem der Ansprüche 8 bis 10, wobei eine Rotation der beweglichen Elemente (20) zwischen der geschlossenen Position und der offenen Position und zurück durch jeweilige Antriebsmittel zu gegebenen Zeitintervallen kontrolliert werden.

12. Anlage gemäß Anspruch 10 oder 11, wobei die kurze Entfernung wenige Zehntel eines Millimeters ist.

13. Anlage (1) gemäß einem der Ansprüche 9 bis 12, wobei die Trennvorrichtung (24) mit einem zweiten Kanal (31) in Verbindung steht, der mit einem zweiten Behälter (26) verbunden ist, der zur Aufnahme von Metallfragmenten vorgesehen ist, die in den festen Restmaterialien enthalten sind.

## Revendications

1. Installation (1) pour transformer en matière première secondaire, ou pour mettre au rebut, des pneumatiques usagés (P), faits de caoutchouc ou d'autres matrices carbonées, comprenant au moins une chambre de pyrolyse (6), dans laquelle lesdits pneumatiques usagés (P) sont soumis à un traitement de pyrolyse, lesdits pneumatiques (P), préalablement divisés en deux moitiés, étant transportés jusqu'à ladite au moins une chambre de pyrolyse (6) au moyen d'au moins un dispositif d'approvisionnement (5) qui reçoit les pneumatiques (P) d'un premier dispositif de transport (3), ladite installation (1) comprenant au moins un élément de joint hydraulique (9) associé audit au moins un dispositif d'approvisionnement (5) et des moyens de chauffage (16) pour chauffer ladite au moins une chambre de pyrolyse (6), ledit au moins un dispositif d'approvisionnement (5) comprenant un second dispositif de transport (7) comprenant un convoyeur à barreaux, qui reçoit les pneumatiques (P) provenant du premier dispositif de transport (3) et transporte les pneumatiques (P) à travers ledit au moins un élément de joint hydraulique (9) et le long d'au moins un conduit d'approvisionnement (11), **caractérisée en ce que** ledit au moins un conduit d'approvisionnement (11) s'étend de manière sensiblement verticale à partir d'une partie inférieure communiquant avec ledit au moins un élément de joint hydraulique (9) jusqu'à une partie d'extrémité (15) qui atteint une zone d'entrée (12) de la au moins une chambre de pyrolyse (6), **en ce que** lesdits pneumatiques (P) sont libérés par ledit second dispositif de transport (7) dans ladite zone d'entrée (12) de manière à tomber par gravité dans ladite chambre de pyrolyse (6) à travers une ouverture d'entrée (13) et **en ce que** ladite ouverture d'entrée est munie d'un élément de fermeture mobile (14), qui peut tourner autour d'un élément d'articulation (16) entre une position fermée et une position ouverte.

2. Installation (1) selon la revendication 1, **caractérisée en ce qu'**elle comprend une pluralité de chambres de pyrolyse (6) dont chacune est approvisionnée avec lesdits pneumatiques (P) au moyen d'un dispositif d'approvisionnement (5) respectif, qui reçoit les pneumatiques (P) provenant du premier dispositif de transport (3) et transporte les pneumatiques (P) jusqu'à une chambre de pyrolyse (6) respective à travers un conduit d'approvisionnement (11) respectif.

3. Installation (1) selon la revendication 1 ou 2, dans laquelle ledit au moins un conduit d'approvisionnement (11) s'étend verticalement sur une longueur d'au moins 4 mètres, en particulier sur une longueur comprise entre 4 et 20 mètres.

4. Installation (1) selon l'une quelconque des revendications précédentes, dans laquelle ledit au moins un élément de joint hydraulique (9) comprend un réservoir (10) contenant un liquide (L), en particulier de l'eau ou de l'huile.

5. Installation (1) selon l'une quelconque des revendications précédentes, dans laquelle ledit élément de fermeture mobile (14) est revêtu d'un matériau thermiquement isolant.

6. Installation (1) selon l'une quelconque des revendications précédentes, comprenant en outre un actionneur (36) adapté pour entraîner ledit élément de fermeture mobile de sorte qu'il tourne autour dudit élément d'articulation (16).

7. Installation (1) selon l'une quelconque des revendications précédentes, dans laquelle ladite partie d'extrémité (15) du au moins un conduit d'approvisionnement (11), en contact avec ladite au moins une chambre de pyrolyse (6), est faite d'un matériau thermiquement isolant.

8. Installation (1) selon l'une quelconque des revendications précédentes, dans laquelle ladite chambre de pyrolyse (6) comprend un fond (28) constitué d'une paire d'éléments mobiles (20) dont chacun peut tourner autour d'un élément d'articulation (21) respectif, entre une position fermée et une position ouverte pour permettre à des matières résiduelles solides du traitement de pyrolyse qui se sont accumulées sur le fond (28) d'être évacuées de la chambre de pyrolyse (6), sous ledit fond (28) étant agencée une trémie (22) qui est adaptée pour transporter lesdites matières résiduelles solides jusqu'à un dispositif de déchiquetage (23), ladite trémie (22) étant munie de moyens de poussée (32) agencés pour pousser jusqu'audit dispositif de déchiquetage (23) des résidus solides qui s'accumulent sur les parois de la trémie (22).

9. Installation (1) selon la revendication 8, **caractérisée en ce qu'**elle comprend en outre un dispositif de séparation (24) associé au dispositif de déchiquetage (23), ledit dispositif de séparation étant agencé pour séparer des particules de carbone de fragments métalliques contenus dans lesdites matières résiduelles solides.

10. Installation selon la revendication 9, dans laquelle ledit dispositif de séparation (24) comprend un rouleau (27) qui peut être entraîné pour tourner autour d'un axe longitudinal de celui-ci, sur la surface duquel une pluralité d'aimants permanents sont distribués, et un élément de déviation (29) qui comprend une première partie en forme de goulotte (37) qui est adaptée pour diriger lesdites matières résiduelles solides vers un premier conduit (30) relié à un premier récipient (25), une deuxième partie (38) qui s'enroule autour du rouleau (27) restant à une courte distance d'une surface du rouleau (27), et une troisième partie (39) qui s'éloigne progressivement du rouleau (27) jusqu'à ce qu'elle rejoigne une surface interne (40) du dispositif de séparation (24).

11. Installation (1) selon l'une quelconque des revendications 8 à 10, dans laquelle une rotation desdits éléments mobiles (20) entre ladite position fermée et ladite position ouverte, et vice versa, est commandée par des moyens d'entraînement respectifs, à des intervalles de temps prédéfinis.

12. Installation selon la revendication 10 ou 11, dans laquelle ladite courte distance est de quelques dixièmes de millimètre.

13. Installation (1) selon l'une quelconque des revendications 9 à 12, dans laquelle ledit dispositif de séparation (24) communique avec un second conduit (31) relié à un second réservoir (26) destiné à recevoir des fragments métalliques contenus dans lesdites matières résiduelles solides.
